# EUROPEAN PATENT APPLICATION

(11) **EP 1 267 512 A1**
(43) Date of publication of application: **18.12.2002**
(21) Application number: 01810583.3
(22) Date of filing: 15.06.2001
(51) Int. Cl.: H04L 1/20

(54) **Transmission quality determination**

(71) Applicant: Ascom AG, 3000 Bern 14 (CH)
(72) Inventor: Wu, Raymond, 3145 Oberscherli (CH)
(74) Representative: Roshardt, Werner Alfred, Dipl.-Phys.

(57) **Abstract**

In order to determine and/or improve the Quality Of Service (QOS) of a communication network, for example a GPRS network, the number of Temporary Block Flows (TBF) which is needed to transmit a certain amount of user data, is counted. Depending on this number of TBF's and the transmitted amount of user data the transmission quality of the communication network is calculated, for example as the ratio of the TBF-number to the amount of data.

## Description

### Technical Field

The invention relates to a process and a device for determination of a transmission quality of a communication network for data transmission, where the data is divided into one datablock or a plurality of datablocks.

### Background art

It is known to determine the transmission Quality or the Quality Of Service (QOS) of a communication network. This is done by measuring one or more parameters which are believed to be representative of the QOS. Such parameters include for example the speech quality or the throughput rate etc.

In some communication networks, i.e. in GPRS (general packet radio service) networks, which are based on transmission of packets of user data, the user data is subdivided into smaller amounts and transmitted in blocks, when a large amount of data has to be transmitted. These blocks are called Temporary Block Flow (TBF). However, these TBF's have to be set up before use as well as released afterwards which lowers the throughput due to the time needed for TBF set up and TBF release.

In known communication systems there is no process or equipment available which enables to determine the influence of TBF set up/release on the QOS of the network during user data transfer.

### Summary of the Invention

It is therefore an object of the present invention to provide a process of the aforementioned kind which enables the determination of the transmission quality of a communication network depending on the TBF handling.

This object can be achieved with the process defined by Claim 1. According to the invention the process for determination of the transmission quality of a communication network for data transmission, where the data is divided into one or more datablocks, involves the determination of the number of datablocks which are needed for the transmission of a certain amount of data. Depending on the number of datablocks and the transmitted amount of data the transmission quality is computed. A simple and therefore preferred way of computing the transmission quality is to build the ratio of the number of datablocks to the transmitted amount of data.

By changing the length of a TBF the number of TBF's needed to transmit the same amount of user data can be varied. The inventive process therefore enables the network operator to determine the QOS depending on the TBF length and hence to choose a TBF length, which best fits the given network conditions. By tuning the network in varying the TBF length the operator can improve the transmission efficiency which for a given network capacity means, that the network can carry more subscriber data.

According to the invention the device for determination of the transmission quality of a communication network for data transmission, where the data is divided into one or more datablocks, comprises means for the determination of the number of datablocks which are needed for the transmission of a certain amount of data. Furthermore it comprises means for calculating the transmission quality depending on the number of datablocks and the transmitted amount of data. It preferably comprises means for calculating the transmission quality as a ratio of the number of datablocks to the transmitted amount of data.

From the following detailed description and from all the claims as a whole it will be clear to a person skilled in the art, that there exist more advantageous embodiments and combinations of characteristics of the invention.

### Ways of carrying out the invention

The drawings used for illustration of the examples show:
- Fig. 1: A schematic diagram of plurality of small Temporary Block Flows (TBF) compared to a large TBF and
- Fig. 2: an extract from a transmission protocol.

GPRS networks are based on transmission of packets of user data. When the user has a large amount of data to be transmitted, the GPRS network will sub-divide the user data into smaller amounts and attempt to transmit them in blocks. These blocks are called Temporary Block Flow (TBF).

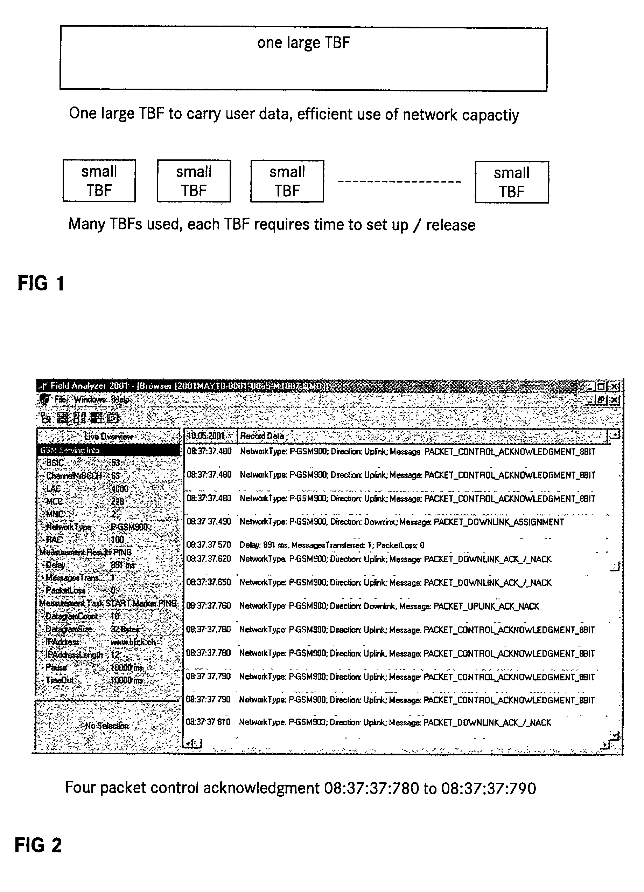

Figure 1 shows one large TBF to carry user data, which allows an efficient use of the network capacity. Figure 1 furthermore shows many smaller TBF's to transmit the same amount of user data where each TBF requires time to set up / release and therefore lowers the data throughput rate.

The TBF has to be set up before use i.e. before it can carry user data, and has to be released after use. The set up / release of TBF requires network signalling and time. Therefore, the time needed to set up/release a TBF represents an overhead in network signalling. During these signalling times, user data is not transmitted. In contrast, if one long TBF is used, little time is "wasted" in set up / release of TBFs.

It follows, therefore, that if the network subscriber has a large amount of data to transmit, and the network sets up / releases a large number of TBFs for this transfer, then the data throughput will be lowered due to the time taken up for the TBF set up / release process.

It is not known that any available process / equipment can measure the amount / number of TBFs used during subscriber data transfer. Further, it is not known that there are any explicit signalling or indications to mark the release of a TBF, so the detection of a TBF release is not obvious.

According to the invention the system measures the amount / number of TBFs used in any user data transfer.

In a preferred embodiment of the invention this is done by for example, searching for and counting the number of times a TBF is set up / released.

Figure 2 shows an extract from a transmission protocol. As the event of a TBF release is not explicitly signalled in a GPRS network, the system will deduce the occurrence of this event by, for example, searching for four "packet control acknowledgment" messages which occur in rapid succession in the transmission protocol. In figure 2, four packet control acknowledgment 08:37:37:780 to 08:37:37:790 can be recognized.

In cases where these four messages are not sent, the system will detect the release of a TBF by the expiry of a timer T3912 in a subscriber handy or any other communication device such as a handy with test equipment features. Once this timer counts down to zero, the TBF will be released. The said subscriber handy or any other device forms part of the system, and there is communication between the system control part and the handy to detect the timer expiry.

It may happen in future, that additional signalling could be introduced to indicate explicitly the release of a TBF. In which case, the system can be easily extended to make use of the new indications.

The system will report the number of TBFs used to carry a specific amount of subscriber data, and hence calculate the "efficiency of the transmission". The less TBFs are used, the more efficient is the transmission.

In knowing whether the transmission link is efficient or not, the network operator can, for example, change the network software and tune the network. After tuning, the measurement can be repeated to record what improvements, if any, has resulted.

For any given network capacity, the more efficient the network transmission, the more subscriber data can the network carry .

## Claims

1. Process for determination of a transmission quality of a communication network for data transmission, where the data is divided into one datablock or a plurality of datablocks, **characterized in that** a number of datablocks, which are needed for transmission of a certain amount of data, is determined and the transmission quality is computed depending on the number of datablocks and the transmitted amount of data, particularly as a ratio of the number of datablocks to the transmitted amount of data.

2. Process according to claim 1, **characterized in that** the data is transmitted based on a packet transmission technology where the data is transmitted within a plurality of data packets and where each datablock comprises at least one data packet.

3. Process according to claim 1 or 2, **characterized in that** the transmission quality of a cellular mobile radio network, particularly a GPRS (general packet radio service) network, is determined.

4. Process according to any one of claims 1 to 3, **characterized in that** the number of datablocks is determined by counting a occurrence of a particular event or a particular series of events.

5. Process according to claim 4, **characterized in that** an event "set up datablock" or an event "release datablock" is counted.

6. Process according to claim 5, **characterized in that** the occurrence of the event "release datablock" is recognized by detecting in a transmission protocol of the data transmission a certain number of a particular message, particularly the message "packet control acknowledgment", in rapid succession.

7. Process according to claim 5, **characterized in that** the occurrence of the event "release datablock" is recognized by detecting an expiry of a timer, particularly the timer T39 12 of a mobile radio device in a GPRS radio network.

8. Process according to claim 5, **characterized in that** the occurrence of the events "set up datablock" or "release datablock" is counted by counting a message in a transmission protocol of the data transmission being reserved for the events "set up datablock" or "release datablock" respectively.

9. Device for determination of a transmission quality of a communication network for data transmission, where the data is divided into one datablock or a plurality of datablocks, **characterized in that** the device comprises means for determination of a number of datablocks needed for transmission of a certain amount of data and means for calculating the transmission quality depending on the number of datablocks and the transmitted amount of data, particularly as a ratio of the number of datablocks to the transmitted amount of data.
